# DEMANDE DE BREVET EUROPEEN

(11) **EP 4 578 803 A1**
(43) Date de publication de la demande: **02.07.2025**
(21) Numéro de dépôt: 24223315.3
(22) Date de dépôt: 26.12.2024
(51) Int. Cl.: B65G 1/137

(54) **STATION DE PREPARATION DE COMMANDES**

(30) Priorité: 29.12.2023 FR 2315475
(71) Demandeur: Fives Xcella, 56260 Lamor-Plage (FR)
(72) Inventeur: JAMES, Aurélien, 56260 Larmor-Plage (FR); LONCLE, Alexis, 56260 Larmor-Plage (FR)
(74) Mandataire: Fives IP

(57) **Abrégé**

L'invention concerne une station de préparation de commandes comprenant un ensemble convoyage (4, 5, 8, 9) comprenant :
- un convoyeur d'arrivée (4) d'articles et un convoyeur de retour (9) d'articles parallèles et sensiblement horizontaux,
- un premier dispositif de transfert (5) agencé entre le convoyeur d'arrivée (4) et le poste (6), et
- un deuxième dispositif de transfert (8) agencé entre le poste (6) et le convoyeur de retour (9),
le poste (6) et les deux dispositifs de transfert (5, 8) sont inclinés et le premier dispositif de transfert (5) comprend des moyen de réception (51) configurés pour accompagner le transfert sous l'effet de la gravité d'un contenant de stockage passant du convoyeur d'arrivée (4) au premier dispositif de transfert (6).

## Description

### Domaine technique de l'invention

L'invention concerne le domaine de l'intralogistique et porte sur une station de préparation de commandes et un système de stockage automatisé d'articles comprenant une telle station de préparation de commandes.

### Etat de la technique

Un système de stockage automatisé comprend généralement un stock composé d'étagères de stockage sur plusieurs niveaux et des moyens de convoyage, tels que des convoyeurs pour transporter des articles depuis et vers le stock et des navettes pour déplacer les articles dans le stock. Dans les systèmes les plus récents, les convoyeurs et navettes sont remplacés par des robot mobiles autonomes (généralement désignés par AMR, pour « Autonomous Mobile Robot » en anglais).

Les systèmes de stockage automatiques comprennent par ailleurs des stations de préparation de commandes dans lesquelles des produits sont transférés par des préparateurs à partir de contenants de stockage vers des contenants de commandes.

Les taches réalisées dans ces zones peuvent être pénibles si la hauteur à laquelle arrivent les contenant de stockage sorties du stock est fixe. Une telle hauteur peut par exemple être adaptée pour une personne de petite taille, mais pas pour une personne grande qui doit sans cesse s'incliner pour prendre des articles à transférer.

En outre, il est important de présenter à l'opérateur le contenant de stockage dans une position inclinée pour lui faciliter la prise d'articles à transférer sans devoir s'incliner.

Par ailleurs, en plus de l'aspect ergonomie de travail du préparateur de commande, il est important que la station de préparation de commandes permette de préparer des commandes avec une bonne cadence.

L'objectif de l'invention est d'apporter une nouvelle solution permettant de répondre aux objectifs décrit ci-dessus en proposant un système de préparation de commandes assurant une bonne cadence de préparation de commandes tout en procurant des conditions de travail ergonomiques à chaque préparateur de commandes.

### Résumé de l'invention

A cet effet, l'invention concerne une station de préparation de commandes comprenant un ensemble de convoyage formant sensiblement un U avec un poste de prélèvement d'articles dans lequel un contenant de stockage est susceptible d'être présenté pour permettre à un opérateur de prendre un article à transférer vers un contenant d'une commande à préparer, l'ensemble de convoyage comprenant :
- Un convoyeur d'arrivée d'articles et un convoyeur de retour d'articles, les deux convoyeurs étant parallèles et sensiblement horizontaux par rapport au sol,
- Un premier dispositif de transfert agencé entre le convoyeur d'arrivée et le poste de prélèvement, et
- Un deuxième dispositif de transfert agencé entre le poste de prélèvement et le convoyeur de retour,
- dans lequel, le poste de prélèvement ainsi que les deux dispositifs de transfert sont inclinés par rapport au convoyeur d'arrivée et au convoyeur de retour, et le premier dispositif de transfert comprend des premiers moyens de réception configurés pour contrôler le transfert sous l'effet de la gravité d'un contenant de stockage passant du convoyeur d'arrivée au premier dispositif de transfert, et des premiers moyens de transfert motorisés pour transférer ledit contenant de stockage du premier dispositif de transfert vers le poste de prélèvement.

La forme en U permet de réduire l'espace occupé par la station de préparation de commandes et permet une circulation facilitée des contenant de stockage et donc une bonne cadence de préparation de commandes.

Le poste est incliné pour faciliter de travail du préparateur de commandes. Le fait que les dispositifs de transfert sont également inclinés permet à l'opérateur les utiliser également comme postes de prélèvement additionnels lorsque le prélèvement est nécessaire de deux ou trois dispositifs de stockage, dans ce cas deux ou trois dispositifs de stockage peuvent être présentés en même temps au préparateur. Ce qui permet donc d'augmenter la cadence de préparation des commandes.

Le premier dispositif de transfert permet un premier transfert uniquement par gravité puisque le dispositif de transfert est incliné, le contenant arrivant au premier dispositif de transfert glisse par gravité sous l'effet de son poids, mais le transfert est contrôlé par les moyens de réception dont le rôle est d'accompagner le transfert et éviter qu'il soit projeté à l'extérieur.

Avantageusement, les premiers moyens de réception peuvent comprendre un élément de freinage configuré pour ralentir le glissement du contenant de stockage.

Avantageusement, les premiers moyens de transfert motorisés peuvent comprendre un moyen configuré pour passer d'une position basse dans laquelle il n'entraine pas le contenant de stockage, à une position haute dans laquelle il entraine le contenant de stockage en direction du poste de prélèvement. Un tel moyen peut être une bande ou courrois de transfert.

En passant en position basse il permet aux moyens de réception d'effectuer le transfert sans être gêné. Ensuite, en position haute le transfert peut être effectué sans être gêné par les moyens de réception.

Avantageusement, le poste de prélèvement comprend un deuxième moyen de transfert motorisé pour transférer un contenant de stockage vers le deuxième dispositif de transfert.

Avantageusement le deuxième dispositif de transfert comprend des deuxièmes moyens de réception pour recevoir un contenant transféré du poste de prélèvement et un troisième moyen de transfert motorisés pour le transférer vers le convoyeur de sortie.

Avantageusement, la station comprend en outre un premier système d'élévation agencé pour recevoir un contenant de stockage à un niveau inférieur et le transférer à un niveau supérieur situé sensiblement à la même hauteur que le convoyeur d'arrivé pour le transférer à ce convoyeur d'arrivé.

Avantageusement, la station de préparation de commande peut comprendre en outre un deuxième système d'élévation agencé pour recevoir un contenant de stockage transféré du convoyeur de sortie au niveau supérieur et le transférer au niveau inférieur.

Avantageusement, le poste de prélèvement peut être réglable en hauteur. Ceci permet d'adapter la position du contenant de stockage davantage pour chaque opérateur et donc améliorer l'ergonomie.

Avantageusement, la station de préparation de commande peut comprendre au niveau inférieure une zone tampon telle qu'un convoyeur agencé pour recevoir des contenant de stockage à transférer à l'élévateur. Avantageusement, une deuxième zone tampon peut être prévue à côté du deuxième élévateur pour recevoir des contenant de stockage venant du deuxième élévateur et les mettre en attente d'être transférés vers un AMR.

Ceci permet d'augmenter la cadence de préparation de commandes.

L'invention porte également sur un système de stockage automatisé d'articles comprenant :
- Un stock comprenant une pluralité de niveaux de stockage pour recevoir des contenant de stockage,
- Une station de préparation de commandes, et.
- Des moyens de transport pour transporter les contenants de stockage entre le stock et la station.

L'invention porte par ailleurs sur un procédé de stockage automatisé d'articles et de préparation de commandes utilisant un système de stockage automatisé décrit ci-dessus.

### Brève description des figures

D'autres particularités et avantages de l'invention apparaîtront dans la description ci-après en relation avec les dessins annexés, donnés à titre d'exemples non limitatifs, dans lesquelles :
[Fig.1] la figure 1 représente une station de préparation de commandes selon l'invention ;
[Fig.2] la figure 2 est une vue agrandie de la partie avant incluant le poste de préparation de commande, selon un exemple de réalisation de l'invention.

Dans la suite de la description, des éléments présentant une structure identique ou des fonctions analogues seront désignés par les mêmes références.

### Description détaillée

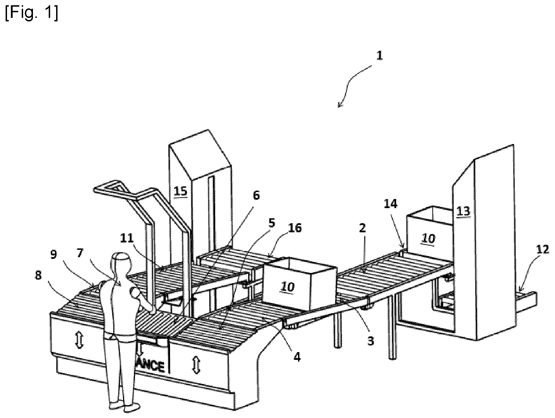

La figure 1 représente partiellement un exemple de station 1 de préparation de commandes selon l'invention. Dans ce système pouvant faire partie d'un système de stockage automatisé, des contenant 10 de stockage portant des articles sont sortis du stock et déplacés par un système de déplacement jusqu'à la zone de préparation de commandes dans laquelle se trouve un préparateur 7 dont la fonction est de préparer une ou plusieurs commandes de clients à partir d'un ou plusieurs contenants stockage 10. Les contenant de préparation de commandes ne sont pas représentés, mais ils sont à côté du préparateur 7.

Le transport des contenants de stockage 10 peut être assuré par des convoyeurs ou des robot mobiles autonomes (AMR). Dans l'exemple de la figure 1 les contenant 10 sont transportés par des AMRs jusqu'au système d'élévation 13, 14, puis l'AMR peut déplacer le contenant 10 directement à l'élévateur 14 qui va le monter jusqu'au niveau supérieur pour le transférer au convoyeur 2. De manière alternative, l'AMR peut d'abord transférer le contenant 10 vers un convoyeur inférieur 12 qui va ensuite le transférer à l'élévateur lorsqu'il est disponible. De cette manière, il est possible de mettre en attente plusieurs contenant sur le convoyeur inférieur 12 ce qui permet de libérer l'AMR pour aller vers d'autre taches, par exemple aller se positionner à côté du deuxième système d'élévation 15, 16 afin de prendre un contenant de stockage à retourner au stock.

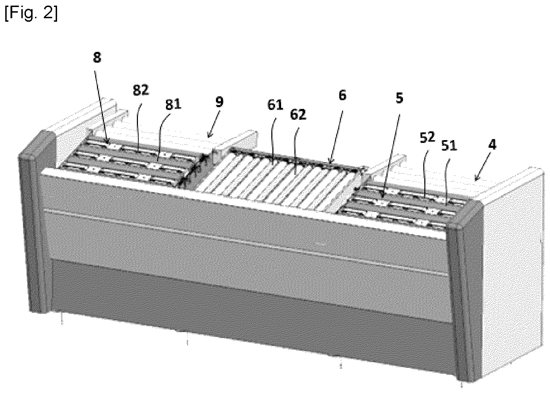

Le contenant 10 est transféré du convoyeur 2 vers un deuxième convoyeur 3 qui le transmet à son tour au convoyeur d'arrivée 4 qui va le pousser vers le premier moyen de transfert 5. Lorsqu'il arrive en contact avec ce dernier qui est incliné par rapport au convoyeur d'entrée 4, le contenant de stockage 10 est tiré par l'effet de gravité dû à son poids il glisse alors sur le moyen de transfert 5. Pour limiter l'effet du poids du contenant 10 et éviter qu'il soit projeté à l'extérieur du dispositif 5, ce dispositif comprend des premiers moyens de réception pour l'accompagner et contrôler son déplacement. Comme représenté en figure 2, les moyens de contrôle peuvent comprendre un ou plusieurs rouleaux de freinage 51 qui sont configurés pour ralentir le glissement du contenant 10 sur le premier dispositif de transfert 5.

Le premier dispositif de transfert 5 comprend en outre des premiers moyens de transfert motorisés 52 pour transférer le contenant 10 d'un angle de 90° vers le poste de prélèvement 6 dans lequel le préparateur 7 va prélever des articles pour préparer la ou les commandes en préparation. Lesdits moyens de transfert peuvent être de différentes natures, par exemple un ensemble de bandes ou courroies de transfert 52 comme montré en figure 2. Avantageusement, les bandes/courroies 52 peuvent avoir une position inférieure pour ne pas gêner l'élément de contrôle 51 et une position supérieure de transfert.

Une fois que le prélèvement des articles par le préparateur 7 est terminé au niveau du poste 6, le contenant est transféré vers le deuxième dispositif de transfert 8. Pour effectuer ce transfert le poste 6 de prélèvement peut avoir un ou plusieurs rouleau motorisés 61 en plus de rouleau non motorisés 62.

Le deuxième dispositif de transfert 8 peut comprendre des deuxièmes moyens de réception 82 pour accompagner le transfert du contenant 10 du poste 6 vers le dispositif 8, ainsi que des troisièmes moyens de transfert 81 pour transférer le contenant 10 vers le convoyeur de sortie 9.

Les moyens de réception 82 peuvent être identiques ou similaire aux moyens de transfert 52 du premier dispositif de transfert 5.

Les moyens de transfert 81 sont par exemple des rouleaux motorisés configurés pour propulser le contenant 10 vers le convoyeur de sortie 9 qui va ensuite le transférer au convoyeur 11. Celui-ci va le transférer à son tour au deuxième élévateur 16 pour être ensuite transféré sur un AMR qui le ramène au stock.

De manière avantageuse, le système permet un réglage en hauteur du poste de prélèvement pour permettre un travail ergonomique au préparateur 7. Comme cela se voit sur la figure 1, une façon d'atteindre cet objectif est de placer les convoyeur 3 et 11 de manière articulée entre deux axes de rotation permettant ainsi un réglage simple en hauteur comme cela est montré par les flèches indiquant un déplacement vertical.

Le post de prélèvement peut avoir en outre un système de pesée pour vérifier le poids des contenant. Des moyens d'affichage peuvent par ailleurs être mis à la disposition du préparateur pour lui permettre de recevoir des indications concernant les commandes à préparer et les produits à prélever du contenant arrivant au poste de prélèvement.

## Revendications

1. Station (1) de préparation de commandes comprenant un ensemble de convoyage (4, 5, 8, 9) formant sensiblement un U avec un poste de prélèvement (6) d'articles dans lequel un contenant de stockage (10) est susceptible d'être présenté pour permettre à un opérateur (7) de prendre un article à transférer vers un contenant d'une commande à préparer, l'ensemble de convoyage comprenant :
- Un convoyeur d'arrivée (4) d'articles et un convoyeur de retour (9) d'articles, les deux convoyeurs étant parallèles et sensiblement horizontaux par rapport au sol,
- Un premier dispositif de transfert (5) agencé entre le convoyeur d'arrivée (4) et le poste de prélèvement (6), et
- Un deuxième dispositif de transfert (8) agencé entre le poste de prélèvement (6) et le convoyeur de retour (9),
- dans lequel, le poste de prélèvement (6) ainsi que les deux dispositifs de transfert (5, 8) sont inclinés par rapport au convoyeur d'arrivée (5) et au convoyeur de retour (9), et le premier dispositif de transfert (5) comprend des premiers moyen de réception (51) configurés pour contrôler le transfert sous l'effet de la gravité d'un contenant de stockage (10) passant du convoyeur d'arrivée (4) au premier dispositif de transfert (6), et des premiers moyens de transfert motorisés (52) pour transférer ledit contenant de stockage (10) du premier dispositif de transfert (5) vers le poste de prélèvement (6).

2. Station (1) de préparation de commandes selon la revendication précédente dans laquelle les premiers moyens de réception (51) comprennent un élément de freinage configuré pour ralentir le glissement du contenant de stockage (10).

3. Station (1) de préparation de commandes selon l'une des revendications précédentes dans laquelle les premiers moyens de transfert motorisés (52) comprennent un moyen configuré pour passer d'une position basse dans laquelle il n'entraine pas le contenant de stockage (10), à une position haute dans laquelle il entraine le contenant de stockage (10) en direction du poste de prélèvement (6).

4. Station (1) de préparation de commandes selon l'une des revendications précédentes dans laquelle le poste de prélèvement (6) comprend un deuxième moyen de transfert (61) motorisé pour transférer un contenant de stockage (10) vers le deuxième dispositif de transfert (8).

5. Station (1) de préparation de commandes selon l'une des revendications précédentes dans laquelle le deuxième dispositif de transfert (8) comprend des deuxièmes moyens de réception (82) pour recevoir un contenant (10) transféré du poste de prélèvement (6) et un troisième moyen de transfert (81) motorisé pour le transférer vers le convoyeur de sortie (9).

6. Station (1) de préparation de commandes selon l'une des revendications précédentes comprenant en outre un premier système d'élévation (13, 14) agencé pour recevoir un contenant de stockage (10) à un niveau inférieur et le transférer à un niveau supérieur situé sensiblement à la même hauteur que le convoyeur d'arrivé (5).

7. Station (1) de préparation de commandes selon la revendication précédente comprenant en outre un deuxième système d'élévation (15, 16) agencé pour recevoir un contenant de stockage (10) transféré du convoyeur de sortie (9) au niveau supérieur et le transférer au niveau inférieur.

8. Station (1) de préparation de commandes selon l'une des revendications précédentes dans laquelle le poste de prélèvement (6) est réglable en hauteur.

9. Système de stockage automatisé d'articles comprenant :
- Un stock comprenant une pluralité de niveaux de stockage pour recevoir des contenant de stockage (10),
- Une station (1) de préparation de commandes selon l'une des revendications précédentes, et.
- Des moyens de transport pour transporter les contenants de stockage (10) entre le stock et la station (1).

10. Procédé de stockage automatisé d'articles et de préparation de commandes utilisant un système de stockage automatisé selon la revendication précédente.
